(19) Europäisches Patentamt European Patent Office Office européen des brevets

(11) **EP 4 339 303 B1**

(12) **EUROPEAN PATENT SPECIFICATION**

(45) Date of publication and mention of the grant of the patent:
**29.10.2025 Bulletin 2025/44**

(21) Application number: **22828144.0**

(22) Date of filing: **26.05.2022**

(51) International Patent Classification (IPC):
*C21C 7/10* *(2006.01)*  *C21C 5/52* *(2006.01)*
*C21C 7/00* *(2006.01)*  *C21C 7/06* *(2006.01)*
*C21C 7/072* *(2006.01)*  *C21C 7/068* *(2006.01)*

(52) Cooperative Patent Classification (CPC):
**C21C 7/10; C21C 5/5205; C21C 7/0075;
C21C 7/06; C21C 7/068; C21C 7/072;** Y02P 10/20

(86) International application number:
**PCT/JP2022/021633**

(87) International publication number:
**WO 2022/270225 (29.12.2022 Gazette 2022/52)**

(54) **MOLTEN STEEL REFINING METHOD**

RAFFINIERUNGSVERFAHREN FÜR GESCHMOLZENEN STAHL

PROCÉDÉ D'AFFINAGE D'ACIER FONDU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2021 JP 2021104029**

(43) Date of publication of application:
**20.03.2024 Bulletin 2024/12**

(73) Proprietor: **JFE Steel Corporation
Tokyo 100-0011 (JP)**

(72) Inventors:
• **HARADA, Akifumi
Tokyo 100-0011 (JP)**
• **NAKAI, Yoshie
Tokyo 100-0011 (JP)**

(74) Representative: **Haseltine Lake Kempner LLP
Bürkleinstrasse 10
80538 München (DE)**

(56) References cited:
**CN-A- 112 226 582    JP-A- H05 195 043
JP-B1- S4 912          JP-B1- S4 912**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a refining method for producing molten steel containing less impurity elements, such as oxygen, nitrogen, and sulfur, and more specifically to a refining method that includes exposing molten steel to a hydrogen gas or an inert gas containing a hydrogen gas in the form of plasma gas in a vacuum vessel of an RH vacuum degasser.

Background Art

Non-metallic inclusions in steel materials are generally known to adversely affect the properties and quality of the materials. Oxide non-metallic inclusions cause clogging of immersion nozzles in continuous casting to reduce productivity due to low casting speed and, in the worst case, interrupt casting. Non-metallic inclusions include oxide-based deoxidization products generated during deoxidization of molten steel, and sulfides and nitrides of alloying elements in steel. To reduce the amount of these non-metallic inclusions (hereinafter referred to simply as "inclusions"), it is important to reduce the amount of oxygen, nitrogen, and sulfur in molten steel as much as possible, and various efforts have been made in the related art.

For oxygen in molten steel, dissolved oxygen in molten steel is fixed in the form of $Al_2O_3$ and $SiO_2$ by adding deoxidizers, such as aluminum (Al) and silicon (Si). The generated oxide inclusions are removed by inclusion flotation by the gas stirring process for molten steel, the circulation process in an RH vacuum degasser, or other processes by way of a difference in specific gravity between the generated oxide inclusions and the molten steel. It is, however, impossible to separate and remove all oxide inclusions under present circumstances, and the oxide inclusions unavoidably remain in the molten steel.

For nitrogen in molten steel, the amount of nitrogen is reduced by vacuum processing in vacuum degassing equipment. However, nitrogen in molten steel is affected by surface active elements, such as oxygen and sulfur, and it is difficult to avoid nitrogen absorption due to entrainment of air from outside the vacuum system, so that a low nitrogen level is not stably achieved under present circumstances.

For sulfur in molten steel, the amount of sulfur is reduced by addition of CaO-based flux or CaO-$Al_2O_3$-based flux (addition of desulfurization agent). For example, ladle refining in a ladle furnace includes stirring molten steel by blowing argon gas into the molten steel from the ladle bottom to promote the reaction between the molten steel in the ladle and the CaO-$Al_2O_3$-based flux so that sulfur moves to the flux (slag) to reduce the amount of sulfur in the molten steel. However, such a treatment in the ladle furnace uses arc heating with graphite electrodes to cause dissolution of carbon in the molten steel. It is therefore difficult to apply such a treatment to ultra-low carbon steels or such steel grades.

There is a desulfurization technique in which CaO-based flux or CaO-$Al_2O_3$-based flux is added to molten steel circulating in a vacuum vessel of an RH vacuum degasser. There is also another desulfurization technique in which CaO-based flux or CaO-$Al_2O_3$-based flux is blasted (blown) onto molten steel circulating in a vacuum vessel from a top blowing lance using an inert gas, such as argon gas, as a carrier gas. In these methods, however, the reaction time between the molten steel and the flux is insufficient to produce molten steel with a low sulfur concentration efficiently.

The use of hydrogen plasma is known as a refining technique for reducing the amount of impurities in metal. Since the temperature inside plasma reaches thousands of degrees Celsius or higher, the hydrogen gas in the plasma gas is converted into atoms or ions in a very active state. The exposure of such very active hydrogen to the surface of molten steel is expected to provide a great refining effect that cannot be achieved by ordinary hydrogen gas exposure alone. More specifically, oxygen, nitrogen, and sulfur in molten steel can be readily removed by the reactions represented by formulas (5) to (7) below.

$$2H + [O] = H_2O \cdots\cdots \quad (5)$$

$$xH + [N] = NH_x \cdots\cdots \quad (6)$$

$$yH + [S] = H_yS \cdots\cdots \quad (7)$$

wherein [O] represents oxygen in molten steel, [N] represents nitrogen in molten steel, and [S] represents sulfur in molten steel.

Oxygen, nitrogen, and sulfur in molten steel can be removed from the system as gases of $H_2O$, $NH_x$, and $H_yS$, respectively, and no inclusions are generated during removal of oxygen (i.e., during deoxidization), resulting in steel with high cleanliness.

Patent Literature 1 is a refining technique for producing high-purity metals using such hydrogen plasma. Patent Literature 1 discloses suitable ranges of the pressure in a furnace and the hydrogen concentration in plasma gas for reducing the amount of oxygen, nitrogen, or carbon in metals when the metals are melted by using hydrogen plasma. Patent literature 2-4 disclose vacuum further molten steel refining methods.

Citation List

Patent Literature

Patent Literature 1: Japanese Patent No. 4305792
Patent Literature 2: CN 112 226 582 A
Patent Literature 3: JP H05 195043 A
Patent Literature 4: JP S49 12 B1

Summary of Invention

Technical Problem

However, the technique of Patent Literature 1 has the following issue when applied to the industrial-scale steelmaking process.
Examples in Patent Literature 1 describe the refining effect obtained when tens of grams to tens of kilograms of metal is treated in a plasma melting furnace. It is, however, necessary to treat more than 100 tons of molten steel in the industrial-scale steelmaking process, and it is difficult to expose the entire molten steel to plasma gas. The technique disclosed in Patent Literature 1 may thus fail to provide the effect of readily removing impurities. To obtain the effect of readily removing impurities, it is important to efficiently perform the hydrogen plasma treatment by appropriately controlling not only the plasma conditions but also the flow conditions of the molten steel.
In the technique disclosed in Patent Literature 1, the amount of metal to be exposed to hydrogen plasma or the relationship between the amount of metal and the plasma gas flow rate is not defined. Therefore, there may be a case where the plasma gas flow rate and the amount of hydrogen relative to the amount of metal are insufficient to obtain an adequate impurity reduction effect even if the composition of plasma gas and the pressure of an atmosphere are appropriately controlled. Furthermore, Patent Literature 1 is not a technique for applying hydrogen plasma to molten iron, but has a function of heating and melting a target meal with plasma. For this, the application of the plasma gas conditions disclosed for molten steel as in the steelmaking process may fail to provide the same expected effect.
The present invention has been made in light of the above circumstances, and an object of the present invention is to provide a refining method for efficiently producing high-purity molten steel with less impurities by accelerating refining reactions, such as deoxidization, denitrification, and desulfurization, upon application of hydrogen plasma to molten steel in an RH vacuum degasser in the steelmaking process.

Solution to Problem

The aspects of the present invention for solving the above problems are as described below.
[1] A molten steel refining method including a step of refining molten steel contained in a ladle by circulating the molten steel in a vacuum vessel of an RH vacuum degasser, wherein in the refining step, a surface of the molten steel circulating in the vacuum vessel of the RH vacuum degasser is subjected to a plasma treatment in which the surface of the molten steel is exposed to a hydrogen gas or an inert gas containing a hydrogen gas in a form of plasma gas from a plasma generator in the vacuum vessel under conditions that satisfy formula (1) below, and the plasma treatment reduces an amount of one or two or more elements selected from oxygen, nitrogen, and sulfur contained in the molten steel,
[Math. 1]

$$\frac{G_P \times (H_2)}{Q} \geq 0.10 \quad \cdots (1)$$

wherein $G_P$ is a flow rate (Nm$^3$/min) of the plasma gas, $(H_2)$ is a hydrogen gas concentration (vol%) in the plasma gas, and Q is a circulation flow rate (ton/min) of the molten steel circulating in the vacuum vessel.

[2] The molten steel refining method according to [1], wherein the circulation flow rate of the molten steel circulating in the vacuum vessel is calculated by using formula (2) below,

[Math. 2]

$$Q=11.4\times(1000\times G_C)^{\frac{1}{3}}\times D^{\frac{4}{3}}\times\left(\ln\left(\frac{P_0}{P}\right)\right)^{\frac{1}{3}}\quad\cdots(2)$$

wherein Q is the circulation flow rate (ton/min) of the molten steel circulating in the vacuum vessel, $G_C$ is a flow rate (Nm³/min) of a circulation gas, D is an inner diameter (m) of snorkels of the RH vacuum degasser, $P_0$ is a pressure (torr) at a position where the circulation gas is blown in, and P is a pressure (torr) in the vacuum vessel.

[3] The molten steel refining method according to [1] or [2], wherein a surface flow velocity of the molten steel circulating in the vacuum vessel and exposed to the plasma gas satisfies relationships represented by formulas (3) and (4) below,

[Math. 3]

$$V\geq\frac{3\times G_P^{0.65}}{\pi\times(L/2)^2}\quad\cdots(3)$$

$$V=\frac{1000\times Q}{\rho\times H\times d}\quad\cdots(4)$$

wherein V is the surface flow velocity (m/min) of the molten steel circulating in the vacuum vessel, $G_P$ is the flow rate (Nm³/min) of the plasma gas, $\pi$ is a ratio of a circumference of a circle to its diameter, L is a center-to-center distance (m) between an up-snorkel and a down-snorkel, Q is the circulation flow rate (ton/min) of the molten steel circulating in the vacuum vessel, $\rho$ is a density (kg/m³) of the molten steel, H is a molten steel height (m) in the vacuum vessel, and d is an inner diameter (m) of the vacuum vessel.

[4] The molten steel refining method according to any one of [1] to [3], wherein a total concentration of iron oxide and manganese oxide in a slag floating on a surface of the molten steel contained in the ladle is 5 mass% or less.

[5] The molten steel refining method according to any one of [1] to [4], wherein the plasma treatment reduces amounts of three elements, oxygen, nitrogen, and sulfur, contained in the molten steel simultaneously.

Advantageous Effects of Invention

According to the present invention, the molten steel being refined in an RH vacuum degasser can be appropriately subjected to a hydrogen plasma treatment and as a result, molten steel with less impurities can be produced readily, which provides industrially advantageous effects.

Brief Description of Drawings

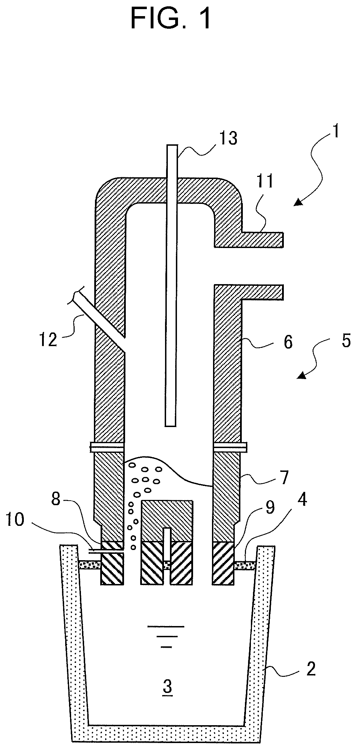

[Fig. 1] Fig. 1 is a schematic longitudinal sectional view of an RH vacuum degasser according to an exemplary embodiment in which a hydrogen plasma treatment is performed in the RH vacuum degasser.

Description of Embodiments

The present invention will be described below in detail.

A molten steel refining method according to the present invention includes a step of refining molten steel contained in a ladle by circulating the molten steel in a vacuum vessel of an RH vacuum degasser, wherein in the refining step, the surface of the molten steel circulating in the vacuum vessel of the RH vacuum degasser is exposed to a hydrogen gas plasma or a gas mixture of a hydrogen gas plasma and an inert gas in the form of plasma gas from a plasma generator placed in the vacuum vessel, and the exposure of the surface of the molten steel to the plasma gas removes one or two or more elements selected from oxygen, nitrogen, and sulfur in the molten steel to reduce the amounts of the one or two or more elements. In this description, the exposure of the surface of the molten steel to a hydrogen gas or an inert gas containing a hydrogen gas in the form of plasma gas is referred to as a "plasma treatment" or "hydrogen plasma treatment".

Fig. 1 is a schematic longitudinal sectional view of an RH vacuum degasser according to an exemplary embodiment in which the plasma treatment is performed in the RH vacuum degasser. In Fig. 1, reference number 1 represents an RH vacuum degasser, 2 represents a ladle, 3 represents molten steel, 4 represents a slag, 5 represents a vacuum vessel, 6 represents an upper vessel, 7 represents a lower vessel, 8 represents an up-snorkel, 9 represents a down-snorkel, 10 represents a circulation gas inlet tube, 11 represents a duct, 12 represents a raw material feeding port, and 13 represents a plasma torch. A vacuum vessel 5 includes an upper vessel 6 and a lower vessel 7. A plasma torch 13 is a device constituting part of the plasma generator. The surface of molten steel 3 circulating in the vacuum vessel is subjected to the hydrogen plasma treatment by being exposed to a plasma gas from an end portion of the plasma torch 13. The plasma torch 13 penetrates an upper part of the vacuum vessel 5 and can vertically move inside the vacuum vessel 5.

In an RH vacuum degasser 1, the ladle 2 containing the molten steel 3 is lifted by a lift (not shown) so that an up-snorkel 8 and a down-snorkel 9 are immersed in the molten steel 3 in the ladle. The inner pressure of the vacuum vessel 5 is then reduced by evacuating the inside of the vacuum vessel 5 by an exhaust device connected to a duct 11, and a circulation gas is blown into the up-snorkel 8 through a circulation gas inlet tube 10. When the inner pressure of the vacuum vessel 5 is reduced, the molten steel 3 in the ladle rises in proportion to a difference between the atmospheric pressure and the pressure (degree of vacuum) in the vacuum vessel and enters the vacuum vessel. The molten steel 3 in the ladle rises in the up-snorkel 8 together with the circulation gas and enters the vacuum vessel 5, which is achieved by the gas-lift effect of the circulation gas blown in through the circulation gas inlet tube 10. The circulation gas is normally an argon gas.

The molten steel 3 that has entered the vacuum vessel 5 because of a difference in pressure and the gas-lift effect returns to the ladle 2 through the down-snorkel 9. The flow of the molten steel that enters the vacuum vessel 5 from the ladle 2 and then returns to the ladle 2 from the vacuum vessel 5 is called "circulation". The molten steel 3 thus forms circulation and undergoes RH vacuum degassing refining.

In other words, when the molten steel 3 is exposed to an atmosphere under reduced pressure in the vacuum vessel, the gas components, such as hydrogen and nitrogen, in the molten steel are transferred from the equilibrium state in contact with the atmosphere to the equilibrium state in contact with the atmosphere under reduced pressure. Thus, hydrogen and nitrogen move from the molten steel 3 into the atmosphere in the vacuum vessel to degas (dehydrogenate and denitrogenate) the molten steel 3. The circulation of the molten steel 3 between the ladle 2 and the vacuum vessel 5, namely, strong stirring of the molten steel 3, promotes separation of oxide inclusions, which are produced by the deoxidization of the molten steel 3 with aluminum or other elements and suspended in the molten steel, from the molten steel 3 into a slag 4.

In the molten steel refining method according to this embodiment, the surface of the molten steel 3 circulating in the vacuum vessel is exposed to a hydrogen gas or an inert gas containing a hydrogen gas in the form of plasma gas from the plasma torch 13 after start of the circulation of the molten steel 3 in the ladle into the vacuum vessel 5. Since the temperature in the plasma reaches thousands of degrees Celsius or higher, the hydrogen gas in the plasma gas is converted into atoms or ions in a very active state. The exposure of the surface of the molten steel to active hydrogen in the form of atoms or ions can form the reactions represented by formulas (5), (6), and (7) below and can more readily remove oxygen, nitrogen, and sulfur in the molten steel.

$$2H + [O] = H_2O \cdots\cdots \qquad (5)$$

$$xH + [N] = NH_x \cdots\cdots \qquad (6)$$

$$yH + [S] = H_yS \cdots\cdots \qquad (7)$$

In formulas (5), (6), and (7), [O] represents oxygen in molten steel, [N] represents nitrogen in molten steel, and [S] represents sulfur in molten steel.

There are various methods for generating plasma. A typical method for generating plasma uses the plasma torch 13 as illustrated in Fig. 1. The plasma torch 13 is one of devices for generating a plasma arc stably and in a wellcontrolled manner in a form suitable for various applications by mainly using a DC power supply and by the action of, for example, gas flow and a water-cooled nozzle.

The plasma torch using a DC power supply described above is a non-transferred plasma torch or a transferred plasma torch. The non-transferred plasma torch eliminates the need of electrodes on the molten steel side and has less equipment restrictions and inexpensive installation costs. From these points of view, the non-transferred plasma torch using DC arc discharge is preferably used.

The plasma generator may be of any type as long as it can be placed in the vacuum vessel of the RH vacuum degasser 1 and can stably supply hydrogen plasma to the molten steel 3. For example, electrodes for generating an AC arc may be disposed in the vacuum vessel of the RH vacuum degasser 1, and a hydrogen gas or an inert gas containing a hydrogen gas may be supplied between the electrodes to convert the hydrogen gas or the inert gas containing hydrogen gas into plasma.

The plasma gas may be a hydrogen gas or a gas mixture of a hydrogen gas and an inert gas. The reason for using a hydrogen gas is that the impurities in the molten steel can be directly removed by using a hydrogen gas plasma, as described above. To obtain the effect of readily removing impurities, 0.5 vol% or more of hydrogen gas is preferably mixed in the plasma gas. Since the impurity removal effect increases with increasing hydrogen gas concentration in the plasma gas, there is no upper limit of the hydrogen gas concentration in the plasma gas. The inert gas may be an argon gas or a helium gas.

To readily reduce the amount of impurities, such as oxygen, nitrogen, and sulfur, in molten steel, the following three factors need to be controlled in suitable ranges: the flow rate of plasma gas, the hydrogen gas concentration in the plasma gas, and the circulation flow rate of the molten steel circulating in the vacuum vessel.

More specifically, to obtain the effect of readily removing impurities, it is necessary to not only increase the hydrogen gas concentration in the plasma gas, but also supply an appropriate amount of hydrogen gas relative to the amount of the molten steel fed to the vacuum vessel 5 of the RH vacuum degasser 1. More specifically, as shown in formula (1) below, the following three factors need to satisfy the relationship of formula (1) below: the flow rate ($G_P$) of plasma gas, the hydrogen concentration ($H_2$) in the plasma gas, and the circulation flow rate ($Q$) of the molten steel circulating in the vacuum vessel. The relationship of three factors, $(G_P \times (H_2)/Q)$, is preferably 0.5 or more, more preferably 1.0 or more. If $(G_P \times (H_2)/Q)$ is more than 20.0, a large output is required for dissociation or ionization of hydrogen in the plasma gas. Furthermore, the plasma torch 13 undergoes noticeable wear with a large output. Therefore, $(G_P \times (H_2)/Q)$ is more preferably 20.0 or less.

[Math. 4]

$$\frac{G_P \times (H_2)}{Q} \geq 0.10 \quad \cdots (1)$$

In formula (1), $G_P$ is the flow rate ($Nm^3/min$) of the plasma gas, $(H_2)$ is the hydrogen gas concentration (vol%) in the plasma gas, and $Q$ is the circulation flow rate (ton/min) of the molten steel circulating in the vacuum vessel. The unit "$Nm^3/min$" of the flow rate of the plasma gas represents the volumetric flow rate of the plasma gas, and "$Nm^3$" means the volume of the plasma gas in the standard state. In this description, the plasma gas in the standard state has 1 atm (101325 Pa) at 0°C.

The circulation flow rate ($Q$) of the molten steel 3 circulating in the vacuum vessel is affected by the flow rate of the circulation gas, the pressure of the atmosphere in the vacuum vessel, and the cross-sectional area of the up-snorkel. The circulation flow rate ($Q$) of the molten steel 3 can thus be obtained by measuring the uniform mixing time in the RH vacuum degasser 1 in an actual plant for each condition and dividing the amount of the molten steel contained in the ladle by the molten steel circulation time obtained from the measured uniform mixing time. The uniform mixing time can be obtained as the time required for variations in tracer element concentration in samples for composition analysis collected from the inside of the ladle over time to fall within ±5% when a tracer element (e.g., copper, nickel) is added to the molten steel in the ladle directly below the up-snorkel or the molten steel in the vacuum vessel. In this case, the molten steel circulation time is about 1/3 the uniform mixing time, and a third of the obtained uniform mixing time can be used as a molten steel circulation time.

It is well known that the circulation flow rate ($Q$) of the molten steel 3 circulating in the vacuum vessel is obtained by the empirical regression equation represented by formula (2) below. Thus, the circulation flow rate ($Q$) of the molten steel 3 circulating in the vacuum vessel is preferably obtained by using formula (2) below.

[Math. 5]

$$Q = 11.4 \times (1000 \times G_C)^{\frac{1}{3}} \times D^{\frac{4}{3}} \times \left( \ln\left(\frac{P_0}{P}\right) \right)^{\frac{1}{3}} \quad \cdots (2)$$

In formula (2), $Q$ is the circulation flow rate (ton/min) of the molten steel circulating in the vacuum vessel, $G_C$ is the flow rate ($Nm^3/min$) of the circulation gas, $D$ is the inner diameter (m) of the snorkels of the RH vacuum degasser, $P_0$ is the pressure (torr) at the position where the circulation gas is blown in, and $P$ is the pressure (torr) in the vacuum vessel. The "torr" is a pressure unit, and 1 torr corresponds to 133.32 Pa. The unit "$Nm^3$" of the flow rate of the circulation gas means the volume of the circulation gas in the standard state, and the circulation gas in the standard state has 1 atm (101325 Pa) at 0°C.

The molten steel 3 contained in the ladle before the hydrogen plasma treatment may be molten steel that has been tapped to the ladle 2 from a converter or an electric arc furnace and transferred to the RH vacuum degasser 1. Otherwise, the molten steel 3 may be molten steel that has been tapped to the ladle from a converter or an electric arc furnace and transferred to the RH vacuum degasser 1 after the ladle refining process in a heating and stirring equipment (may be referred to as a ladle furnace) or other equipment.

The molten steel 3 before the hydrogen plasma treatment may be in a non-deoxidized state, or the molten steel 3 may be pre-deoxidized by supplying a reducing gas, such as a hydrogen gas or propane, to the molten steel 3 before the hydrogen plasma treatment. The pre-deoxidization of the molten steel 3 with a reducing gas before the plasma treatment allows the plasma treatment to start when the oxygen concentration in the molten steel decreases to some extent, which can reduce the load of the reaction represented by formula (5) above and can shorten the time for the plasma treatment. The pre-deoxidization with the reducing gas may be conducted before the treatment in the RH vacuum degasser or before the plasma treatment during refining in the RH vacuum degasser.

To focus on the removal of nitrogen and sulfur from the molten steel, the oxygen concentration in the molten steel may be reduced in advance by deoxidizing the molten steel 3 with addition of deoxidizers, such as aluminum and silicon, before the plasma treatment. In this case, the molten steel already has a low oxygen concentration, and the deoxidization effect of the plasma treatment is limited. The oxygen in the molten steel functions as a surfactant element and may inhibit desorption of nitrogen gas, hydrogen nitride, and hydrogen sulfide from the molten steel surface to a gas phase (atmosphere in vacuum vessel). However, when the oxygen concentration in the molten steel is reduced in advance by the deoxidization treatment with aluminum and silicon, the effect of hydrogen plasma in rapidly removing oxygen, nitrogen, sulfur, and other elements in the molten steel can be obtained.

The plasma output (E) more preferably satisfies formula (9) below. A certain or higher level of output is required for dissociation of hydrogen gas into atoms at a high rate, but the required output depends on the flow rate of the introduced plasma gas or the hydrogen concentration in the plasma gas. As a result of investigation, it is found that the plasma output preferably satisfies the relationship of formula (9) below. With increasing output, not only the dissociation of hydrogen gas into hydrogen atoms but also the rate of ionization of hydrogen gas into hydrogen ions increases, so that the impurity removal effect becomes more noticeable. With increasing output, however, the power cost increases. The plasma output is therefore selected on the basis of the balance between the required quality and the cost.

$$E \geq G_P \times (1.5 \times (H_2) + 11.5) \quad \cdots (9)$$

In formula (9), E is a plasma output (kW).

The inventors of the present invention have found that impurities in molten steel can be more efficiently reduced by appropriately controlling the flow of the molten steel in the vacuum vessel during the hydrogen plasma treatment.

From the numerical calculations and water model experiments simulating the RH vacuum degasser, the inventors of the present invention have found that the flow velocity of the steel bath in the vacuum vessel is not uniform, the flow along the inner wall of the vacuum vessel 5 is fast, and the flow in a central part of the steel bath in the vacuum vessel 5 is slower than that on the wall surface side. It has been considered important to appropriately control the flow of the molten steel in the vacuum vessel in order to improve the impurity removal rate during the hydrogen plasma treatment since the position of exposure to hydrogen plasma is near the central part of the steel bath in the vacuum vessel 5.

Therefore, the relationship between the plasma exposure conditions and the surface flow velocity of the molten steel circulating in the vacuum vessel has been evaluated. As a result, it has been found that the impurity removal with hydrogen plasma is efficiently conducted by controlling the surface flow velocity (V) of the molten steel in the vacuum vessel in a range that satisfies formula (3) below in order to readily remove impurities in the molten steel.

[Math. 6]

$$V \geq \frac{3 \times G_P^{0.65}}{\pi \times (L/2)^2} \quad \cdots (3)$$

In formula (3), V is the surface flow velocity (m/min) of the molten steel circulating in the vacuum vessel, $G_P$ is the flow rate (Nm$^3$/min) of the plasma gas, $\pi$ is the ratio of the circumference of a circle to its diameter, and L is the center-to-center distance (m) between the up-snorkel and the down-snorkel.

In other words, a region in which the flow velocity is slower than the flow along the inner wall of the vacuum vessel 5 and that is a central part of the steel bath in the vacuum vessel described above can be approximately expressed by using the center-to-center distance between the up-snorkel 8 and the down-snorkel 9. New molten steel 3 can be always supplied to a hydrogen plasma-exposed area in the central part of the steel bath by making the surface flow velocity (V) of the molten steel in the vacuum vessel higher than an index corresponding to the linear flow velocity of plasma gas blown into the central part of the steel bath in the vacuum vessel, whereby the impurities in the molten steel can be readily removed.

The surface flow velocity (V) of the molten steel circulating in the vacuum vessel can be obtained from formula (4) below.

[Math. 7]

$$V = \frac{1000 \times Q}{\rho \times H \times d} \quad \cdots (4)$$

In formula (4), V is the surface flow velocity (m/min) of the molten steel circulating in the vacuum vessel, Q is the circulation flow rate (ton/min) of the molten steel circulating in the vacuum vessel, $\rho$ is the density (kg/m$^3$) of the molten steel, H is the molten steel height (m) in the vacuum vessel, and d is the inner diameter (m) of the vacuum vessel.

If the surface flow velocity (V) of the molten steel in the vacuum vessel is smaller than the right side of formula (3), the supply and mixing of new molten steel to the hydrogen plasma-exposed area in a central part of the steel bath are not promoted, and the impurity removal effect of hydrogen plasma is small.

From the foregoing, the molten steel flow in the vacuum vessel, namely, the surface flow velocity (V) of the molten steel circulating in the vacuum vessel, is preferably in the range of formula (3). To maintain the surface flow velocity (V) of the molten steel circulating in the vacuum vessel in the range of formula (3), the circulation flow rate (Q; ton/min) of the molten steel circulating in the vacuum vessel and the flow rate (G$_P$; Nm$^3$/min) of the plasma gas are controlled so as to satisfy formula (8) below. Formula (8) is obtained from formula (3) and formula (4), and the variables in formula (8) have the same meanings as in formulas (3) and (4).

[Math. 8]

$$\frac{Q}{G_P^{0.65}} \geq \frac{3 \times \rho \times H \times d}{1000 \times \pi \times (L/2)^2} \quad \cdots (8)$$

In particular, iron oxide and manganese oxide in the slag, among the components of the slag 4 floating on the surface of the molten steel 3 in the ladle, may be oxygen sources supplied to the molten steel 3. For this, the total concentration of iron oxide and manganese oxide in the slag 4 is preferably 5 mass% or less, more preferably 3 mass% or less, still more preferably 1 mass% or less. If the total concentration of iron oxide and manganese oxide is more than 5 mass%, oxygen is supplied to the molten steel 3 from the slag 4 simultaneously with the plasma treatment, and the impurity reduction effect is not sufficient.

An effective method for reducing the amount of iron oxide and manganese oxide in the slag 4 involves adding metal aluminum or aluminum dross to the slag 4 floating on the molten steel before start of the treatment in the RH vacuum degasser 1 to reduce iron oxide and manganese oxide with aluminum. Another effective method involves removing the slag 4 from the ladle 2 and then adding a slag-forming agent into the ladle to newly form a slag with less iron oxide and manganese oxide.

The timing of addition of deoxidizers, such as aluminum and silicon, to the molten steel 3 after the hydrogen plasma treatment is not limited. For example, after stop of hydrogen plasma, oxygen is supplied to the molten steel 3 from the air, the slag 4, or the ladle refractories to increase the oxygen concentration in the molten steel. For this, deoxidizers, such as aluminum and silicon, are preferably added to the molten steel 3 through a raw material feeding port 12 immediately after the hydrogen plasma treatment to maintain the oxygen concentration in the molten steel, which has been reduced by the hydrogen plasma treatment, at a low level. If it is necessary to control molten steel components other than the deoxidizers, such as aluminum and silicon, certain ferroalloys or pure metals are added to the molten steel circulating in the vacuum vessel through the raw material feeding port 12 after the hydrogen plasma treatment.

Since the hydrogen plasma treatment increases the hydrogen concentration in the molten steel to several mass ppm or higher, the pressure of the atmosphere in the vacuum vessel is reduced to 10 torr or less without hydrogen plasma exposure after the hydrogen plasma treatment. The hydrogen concentration in the molten steel is then preferably reduced by continuously circulating the molten steel 3 in the vacuum vessel 5 under reduced pressure of 10 torr or lower for 5 minutes or longer.

The refining method using the hydrogen plasma treatment as described above can readily reduce the amount of each of oxygen, nitrogen, and sulfur in the molten steel to 20 mass ppm or less.

EXAMPLES

The hydrogen plasma treatment of molten steel tapped from a converter was tested by using the RH vacuum degasser illustrated in Fig. 1 in an actual plant with a scale of 200 tons or more and 350 tons or less of molten steel per charge. The surface of the molten steel circulating in the vacuum vessel was exposed to hydrogen plasma, at various plasma gas flow rates and various hydrogen concentrations in the plasma gas, from a non-transferred plasma torch using DC arc discharge placed in an upper part of the vacuum vessel of the RH vacuum degasser. In addition, the operation conditions of the RH vacuum degasser and the molten steel composition (e.g., oxygen concentration, nitrogen concentration, sulfur concentration) were varied.

Before and after the hydrogen plasma treatment in the RH vacuum degasser, samples for composition analysis were collected from the molten steel in the ladle and analyzed for the oxygen concentration, the nitrogen concentration, and the sulfur concentration in the molten steel to investigate the effect of the plasma treatment. The plasma treatment time was about 15 minutes for all samples. It is noted that no deoxidizer, such as aluminum, was added during the time from after tapping from the converter to the plasma treatment. The circulation flow rate (Q) of the molten steel into the vacuum vessel was calculated by using formula (2). The iron oxide concentration and the manganese oxide concentration in the slag in the ladle were adjusted by adding aluminum dross to the slag in the ladle before start of the treatment in the RH vacuum degasser.

Table 1 shows the test conditions of each test. Table 2 shows the evaluation results.

[Table 1]

| | Mass of Molten Steel | Flow Rate of Plasma Gas ($G_P$) | Hydrogen Concentration in Plasma Gas (($H_2$)) | Pressure in Vacuum Vessel (P) | Flow Rate of Circulation Gas (Gc) | Inner Diameter of Up-Snorkel (D) | Center-To-Center Distance Between Snorkels (L) | Inner Diameter of Vacuum Vessel (d) | Molten Steel Height in Vacuum Vessel (H) | Circulation Flow Rate of Molten Steel (Q) | Surface Flow Velocity of Molten Steel (V) | Left Side of Formula (1) | Right Side of Formula (3) | Judgement of Formula (1) | Judgement of Formula (3) |
|---|---|---|---|---|---|---|---|---|---|---|---|---|---|---|---|
| | ton | Nm³/min | vol% | torr | Nm³/min | m | m | m | m | ton/min | m/min | | | | |
| Invention Example 1 | 329 | 25 | 0.7 | 29 | 3.0 | 0.75 | 1.35 | 3.0 | 0.40 | 166.2 | 19.8 | 0.11 | 17.0 | satisfied | satisfied |
| Invention Example 2 | 230 | 13 | 2.0 | 23 | 1.5 | 0.50 | 1.25 | 2.0 | 0.45 | 78.6 | 12.5 | 0.33 | 13.0 | satisfied | unsatisfied |
| Invention Example 3 | 217 | 31 | 2.5 | 26 | 3.0 | 0.60 | 1.25 | 2.1 | 0.41 | 124.8 | 20.7 | 0.62 | 22.8 | satisfied | unsatisfied |
| Invention Example 4 | 220 | 26 | 0.6 | 27 | 3.0 | 0.60 | 1.45 | 1.9 | 0.41 | 124.3 | 22.8 | 0.13 | 15.1 | satisfied | satisfied |
| Invention Example 5 | 350 | 23 | 3.0 | 32 | 2.5 | 0.70 | 1.60 | 2.4 | 0.30 | 141.2 | 28.0 | 0.49 | 11.5 | satisfied | satisfied |
| Invention Example 6 | 340 | 34 | 4.0 | 39 | 2.5 | 0.80 | 1.80 | 2.8 | 0.27 | 165.2 | 31.2 | 0.82 | 11.7 | satisfied | satisfied |
| Invention Example 7 | 330 | 15 | 4.0 | 21 | 3.0 | 0.65 | 1.75 | 2.5 | 0.32 | 141.7 | 25.3 | 0.42 | 7.3 | satisfied | satisfied |
| Invention Example 8 | 340 | 30 | 0.5 | 29 | 2.0 | 0.60 | 1.60 | 2.3 | 0.29 | 107.8 | 23.1 | 0.14 | 13.6 | satisfied | satisfied |
| Invention Example 9 | 220 | 25 | 3.5 | 26 | 2.5 | 0.70 | 1.50 | 2.0 | 0.41 | 144.3 | 25.1 | 0.61 | 13.8 | satisfied | satisfied |
| Invention Example 10 | 320 | 64 | 10.0 | 48 | 2.5 | 0.80 | 1.75 | 2.6 | 0.25 | 161.2 | 35.4 | 3.97 | 18.6 | satisfied | satisfied |
| Invention Example 11 | 318 | 59 | 20.0 | 40 | 2.5 | 0.75 | 1.80 | 2.5 | 0.29 | 151.1 | 29.8 | 7.81 | 16.7 | satisfied | satisfied |
| Invention Example 12 | 245 | 53 | 75.0 | 39 | 3.0 | 0.75 | 1.70 | 2.7 | 0.37 | 161.0 | 23.0 | 24.68 | 17.5 | satisfied | satisfied |
| Comparative Example 1 | 320 | 39 | 0.2 | 35 | 2.0 | 0.65 | 1.50 | 2.7 | 0.26 | 117.6 | 23.9 | 0.07 | 18.4 | unsatisfied | satisfied |

(continued)

| | Mass of Molten Steel | Flow Rate of Plasma Gas ($G_P$) | Hydrogen Concentration in Plasma Gas (($H_2$)) | Pressure in Vacuum Vessel (P) | Flow Rate of Circulation Gas (Gc) | Inner Diameter of Up-Snorkel (D) | Center-To-Center Distance Between Snorkels (L) | Inner Diameter of Vacuum Vessel (d) | Molten Steel Height in Vacuum Vessel (H) | Circulation Flow Rate of Molten Steel (Q) | Surface Flow Velocity of Molten Steel (V) | Left Side of Formula (1) | Right Side of Formula (3) | Judgement of Formula (1) | Judgement of Formula (3) |
|---|---|---|---|---|---|---|---|---|---|---|---|---|---|---|---|
| | ton | Nm$^3$/min | vol% | torr | Nm$^3$/min | m | m | m | m | ton/min | m/min | | | | |
| Comparative Example 2 | 236 | 53 | 0.1 | 42 | 3.0 | 0.60 | 1.45 | 2.2 | 0.33 | 118.6 | 23.3 | 0.04 | 24.0 | unsatisfied | unsatisfied |
| Comparative Example 3 | 253 | 14 | 0.3 | 19 | 3.0 | 0.80 | 1.70 | 2.8 | 0.38 | 188.7 | 25.3 | 0.02 | 7.3 | unsatisfied | satisfied |
| Comparative Example 4 | 339 | 5 | 1.0 | 16 | 2.5 | 0.60 | 1.65 | 2.4 | 0.39 | 122.8 | 18.7 | 0.04 | 4.0 | unsatisfied | satisfied |

[Table 2]

| | T.Fe + MnO Concentration in Slag | Impurity Concentration in Molten Steel Before Plasma Treatment | | | Impurity Concentration in Molten Steel After Plasma Treatment | | | Impurity Removal Rate of Plasma Treatment | | |
|---|---|---|---|---|---|---|---|---|---|---|
| | | oxygen in molten steel | nitrogen in molten steel | sulfur in molten steel | oxygen in molten steel | nitrogen in molten steel | sulfur in molten steel | oxygen in molten steel | nitrogen in molten steel | sulfur in molten steel |
| | mass% | mass ppm | mass ppm | mass ppm | mass ppm | mass ppm | mass ppm | % | % | % |
| Invention Example 1 | 6.8 | 424 | 42 | 23 | 19 | 19 | 18 | 95.5 | 54.8 | 21.7 |
| Invention Example 2 | 5.6 | 402 | 39 | 22 | 16 | 17 | 16 | 96.0 | 56.4 | 27.3 |
| Invention Example 3 | 5.3 | 517 | 43 | 31 | 13 | 16 | 20 | 97.5 | 62.8 | 35.5 |
| Invention Example 4 | 6.2 | 520 | 42 | 26 | 10 | 15 | 15 | 98.1 | 64.3 | 42.3 |
| Invention Example 5 | 5.9 | 640 | 49 | 25 | 9 | 14 | 13 | 98.6 | 71.4 | 48.0 |
| Invention Example 6 | 7.1 | 470 | 76 | 27 | 6 | 11 | 11 | 98.7 | 85.5 | 59.3 |
| Invention Example 7 | 3.8 | 530 | 67 | 26 | 4 | 9 | 9 | 99.2 | 86.6 | 65.4 |
| Invention Example 8 | 4.1 | 580 | 34 | 18 | 5 | 7 | 7 | 99.1 | 79.4 | 61.1 |
| Invention Example 9 | 1.9 | 430 | 44 | 27 | 2 | 5 | 8 | 99.5 | 88.6 | 70.4 |
| Invention Example 10 | 0.8 | 516 | 59 | 34 | 1 | 4 | 7 | 99.8 | 93.2 | 79.4 |
| Invention Example 11 | 0.7 | 548 | 45 | 37 | 1 | 3 | 6 | 99.8 | 93.3 | 83.8 |
| Invention Example 12 | 0.9 | 587 | 53 | 36 | <1 | 2 | 5 | 99.9 | 96.2 | 86.1 |
| Comparative Example 1 | 6.1 | 541 | 64 | 23 | 49 | 50 | 21 | 90.9 | 21.9 | 8.7 |
| Comparative Example 2 | 3.1 | 550 | 37 | 29 | 55 | 30 | 28 | 90.0 | 18.9 | 3.4 |
| Comparative Example 3 | 5.9 | 498 | 39 | 23 | 52 | 35 | 23 | 89.6 | 10.3 | 0.0 |
| Comparative Example 4 | 2.1 | 538 | 46 | 23 | 57 | 39 | 21 | 89.4 | 15.2 | 8.7 |

In Invention Examples, the hydrogen plasma treatment for 15 minutes reduced the oxygen concentration, the nitrogen concentration, and the sulfur concentration in the molten steel to 20 mass ppm or less simultaneously and rapidly. With regard to the removal rate of each element from start to end of the plasma treatment, the removal rates of oxygen, nitrogen, and sulfur in the molten steel were 95% or higher, 54% or higher, and 21% or higher, respectively.

In Comparative Examples which do not satisfy the conditions of the present invention, reductions in oxygen, nitrogen, and sulfur in the molten steel after the hydrogen plasma treatment were insufficient, and the concentration of each element after the hydrogen plasma treatment was more than 20 mass ppm. With regard to the removal rate of each element from start to end of the plasma treatment, the removal rates of oxygen, nitrogen, and sulfur in the molten steel were 91% or lower, 22% or lower, and 9% or lower, respectively.

Reference Signs List

1    RH Vacuum Degasser
2    Ladle
3    Molten Steel
4    Slag
5    Vacuum Vessel
6    Upper Vessel
7    Lower Vessel
8    Up-Snorkel
9    Down-Snorkel
10   Circulation Gas Inlet Tube
11   Duct
12   Raw Material Feeding Port
13   Plasma Torch

**Claims**

1. A molten steel refining method comprising a step of refining molten steel contained in a ladle by circulating the molten steel in a vacuum vessel of an RH vacuum degasser, wherein in the refining step, a surface of the molten steel circulating in the vacuum vessel of the RH vacuum degasser is subjected to a plasma treatment in which the surface of the molten steel is exposed to a hydrogen gas or an inert gas containing a hydrogen gas in a form of plasma gas from a plasma generator in the vacuum vessel under conditions that satisfy formula (1) below, and the plasma treatment reduces an amount of one or two or more elements selected from oxygen, nitrogen, and sulfur contained in the molten steel,
[Math. 1]

$$\frac{G_P \times (H_2)}{Q} \geq 0.10 \quad \cdots (1)$$

wherein $G_P$ is a flow rate ($Nm^3/min$) of the plasma gas, $(H_2)$ is a hydrogen gas concentration (vol%) in the plasma gas, and Q is a circulation flow rate (ton/min) of the molten steel circulating in the vacuum vessel.

2. The molten steel refining method according to Claim 1, wherein the circulation flow rate of the molten steel circulating in the vacuum vessel is calculated by using formula (2) below,
[Math. 2]

$$Q = 11.4 \times (1000 \times G_C)^{\frac{1}{3}} \times D^{\frac{4}{3}} \times \left( \ln \left( \frac{P_0}{P} \right) \right)^{\frac{1}{3}} \quad \cdots (2)$$

wherein Q is the circulation flow rate (ton/min) of the molten steel circulating in the vacuum vessel, $G_C$ is a flow rate ($Nm^3/min$) of a circulation gas, D is an inner diameter (m) of snorkels of the RH vacuum degasser, $P_0$ is a pressure (torr) at a position where the circulation gas is blown in, and P is a pressure (torr) in the vacuum vessel.

**3.** The molten steel refining method according to Claim 1 or 2, wherein a surface flow velocity of the molten steel circulating in the vacuum vessel and exposed to the plasma gas satisfies relationships represented by formulas (3) and (4) below,

[Math. 3]

$$V \geq \frac{3 \times G_P^{0.65}}{\pi \times (L/2)^2} \quad \cdots (3)$$

$$V = \frac{1000 \times Q}{\rho \times H \times d} \quad \cdots (4)$$

wherein V is the surface flow velocity (m/min) of the molten steel circulating in the vacuum vessel, $G_P$ is the flow rate (Nm³/min) of the plasma gas, $\pi$ is a ratio of a circumference of a circle to its diameter, L is a center-to-center distance (m) between an up-snorkel and a down-snorkel, Q is the circulation flow rate (ton/min) of the molten steel circulating in the vacuum vessel, $\rho$ is a density (kg/m³) of the molten steel, H is a molten steel height (m) in the vacuum vessel, and d is an inner diameter (m) of the vacuum vessel.

**4.** The molten steel refining method according to any one of Claims 1 to 3, wherein a total concentration of iron oxide and manganese oxide in a slag floating on a surface of the molten steel contained in the ladle is 5 mass% or less.

**5.** The molten steel refining method according to any one of Claims 1 to 4, wherein the plasma treatment reduces amounts of three elements, oxygen, nitrogen, and sulfur, contained in the molten steel simultaneously.

**Patentansprüche**

**1.** Raffinierungsverfahren für geschmolzenen Stahl, umfassend einen Schritt eines Raffinierens von geschmolzenem Stahl, der in einer Pfanne enthalten ist, durch Zirkulieren des geschmolzenen Stahls in einem Vakuumgefäß eines RH-Vakuumentgasers, wobei in dem Raffinierschritt eine Oberfläche des geschmolzenen Stahls, der in dem Vakuumgefäß des RH-Vakuumentgasers zirkuliert, einer Plasmabehandlung unterzogen wird, bei der die Oberfläche des geschmolzenen Stahls einem Wasserstoffgas oder einem Inertgas, das ein Wasserstoffgas in Form eines Plasmagases aus einem Plasmagenerator in dem Vakuumgefäß enthält, unter Bedingungen ausgesetzt wird, die die nachstehende Formel (1) erfüllen, und die Plasmabehandlung eine Menge von einem oder zwei oder mehreren Elementen, ausgewählt aus Sauerstoff, Stickstoff und Schwefel, die in dem geschmolzenen Stahl enthalten sind, reduziert,
[Math. 1]

$$\frac{G_P \times (H_2)}{Q} \geq 0,10 \cdots (1)$$

wobei $G_P$ eine Durchflussrate (Nm³/min) des Plasmagases ist, $(H_2)$ eine Wasserstoffgaskonzentration (Vol.-%) in dem Plasmagas ist und Q eine Zirkulationsdurchflussrate (Tonne/min) des in dem Vakuumbehälter zirkulierenden geschmolzenen Stahls ist.

**2.** Raffinierungsverfahren für geschmolzenen Stahl nach Anspruch 1, wobei die Zirkulationsdurchflussrate des geschmolzenen Stahls, der in dem Vakuumbehälter zirkuliert, unter Verwendung der nachstehenden Formel (2) berechnet wird,
[Math. 2]

$$Q = 11{,}4 \times (1000 \times G_C)^{\frac{1}{3}} \times D^{\frac{4}{3}} \times \left( \ln\left(\frac{P_0}{P}\right) \right)^{\frac{1}{3}} \cdots (2)$$

wobei Q die Zirkulationsdurchflussrate (Tonne/min) des in dem Vakuumbehälter zirkulierenden geschmolzenen Stahls ist, $G_C$ eine Durchflussrate (Nm$^3$/min) eines Zirkulationsgases ist, D ein Innendurchmesser (m) von Schnorcheln des RH-Vakuumentgasers ist, $P_0$ ein Druck (Torr) an einer Stelle ist, an der das Zirkulationsgas eingeblasen wird, und P ein Druck (Torr) in dem Vakuumbehälter ist.

**3.** Raffinierungsverfahren für geschmolzenen Stahl nach Anspruch 1 oder 2, wobei eine Oberflächenströmungsgeschwindigkeit des geschmolzenen Stahls, der in dem Vakuumgefäß zirkuliert und dem Plasmagas ausgesetzt ist, die nachstehenden Formeln (3) und (4) dargestellten Beziehungen erfüllt,

[Math. 3]

$$V \geq \frac{3 \times G_P^{0{,}65}}{\pi \times (L/2)^2} \cdots (3)$$

$$V = \frac{1000 \times Q}{\rho \times H \times d} \cdots (4)$$

wobei V die Oberflächenströmungsgeschwindigkeit (m/min) des in dem Vakuumgefäß zirkulierenden geschmolzenen Stahls ist, $G_P$ die Durchflussrate (Nm$^3$/min) des Plasmagases ist, $\pi$ ein Verhältnis des Umfangs eines Kreises zu seinem Durchmesser ist, L ein Abstand von Mitte zu Mitte (m) zwischen einem oberen Schnorchel und einem unteren Schnorchel ist, Q eine Zirkulationsdurchflussrate (Tonne/min) des in dem Vakuumbehälter zirkulierenden geschmolzenen Stahls ist, $\rho$ eine Dichte (kg/m$^3$) des geschmolzenen Stahls ist, H eine Höhe (m) des geschmolzenen Stahls in dem Vakuumbehälter ist und d ein Innendurchmesser (m) des Vakuumbehälters ist.

**4.** Raffinierungsverfahren für geschmolzenen Stahl nach einem der Ansprüche 1 bis 3, wobei eine Gesamtkonzentration von Eisenoxid und Manganoxid in einer Schlacke, die auf einer Oberfläche des in der Pfanne enthaltenen geschmolzenen Stahls schwimmt, 5 Massenprozent oder weniger beträgt.

**5.** Raffinierungsverfahren für geschmolzenen Stahl nach einem der Ansprüche 1 bis 4, wobei die Plasmabehandlung die Mengen der drei Elemente Sauerstoff, Stickstoff und Schwefel, die in dem geschmolzenen Stahl enthalten sind, gleichzeitig reduziert.

**Revendications**

**1.** Procédé d'affinage d'acier en fusion comprenant une étape consistant à raffiner un acier en fusion contenu dans une poche de coulée en faisant circuler l'acier en fusion dans une chambre à vide d'un dégazeur sous vide RH, dans lequel, lors de l'étape d'affinage, une surface de l'acier en fusion circulant dans la chambre à vide du dégazeur sous vide RH est soumise à un traitement au plasma dans lequel la surface de l'acier en fusion est exposée à de l'hydrogène gazeux ou à un gaz inerte contenant de l'hydrogène gazeux sous forme de gaz plasma à partir d'un générateur de plasma dans la chambre à vide dans des conditions qui répondent à la formule (1) ci-dessous, et le traitement au plasma réduit une quantité d'un, deux ou plusieurs éléments choisis parmi de l'oxygène, de l'azote et du soufre contenus dans l'acier en fusion,

[Maths. 1]

$$\frac{G_P \times (H_2)}{Q} \geq 0{,}10 \cdots (1)$$

où $G_P$ est un débit (en Nm$^3$/min) du gaz plasma, $(H_2)$ est une concentration d'hydrogène gazeux (en vol%) dans le gaz plasma, et Q est un débit de circulation (en tonne/min) de l'acier en fusion circulant dans la chambre à vide.

2. Procédé d'affinage d'acier en fusion selon la revendication 1, dans lequel le débit de circulation de l'acier en fusion circulant dans la chambre à vide est calculé à l'aide de la formule (2) ci-dessous,
[Maths. 2]

$$Q = 11{,}4 \times (1\ 000 \times G_C)^{\frac{1}{3}} \times D^{\frac{4}{3}} \times \left( \text{In} \left( \frac{P_0}{P} \right) \right)^{\frac{1}{3}} \cdots (2)$$

où Q est le débit de circulation (en tonne/min) de l'acier en fusion circulant dans la chambre à vide, $G_C$ est un débit (en $Nm^3$/min) d'un gaz de circulation, D est un diamètre intérieur (en m) de schnorkels du dégazeur sous vide RH, $P_0$ est une pression (en torr) au niveau d'une position où le gaz de circulation est soufflé, et P est une pression (en torr) dans la chambre à vide.

3. Procédé d'affinage d'acier en fusion selon la revendication 1 ou 2, dans lequel une vitesse d'écoulement superficielle de l'acier en fusion circulant dans la chambre à vide et exposé au gaz plasma répond aux relations représentées par les formules (3) et (4) ci-dessous,

[Maths. 3]

$$V \geq \frac{3 \times G_P^{0,65}}{\pi \times (L/2)^2} \cdots (3)$$

$$V = \frac{1\ 000 \times Q}{\rho \times H \times d} \cdots (4)$$

où V est la vitesse d'écoulement superficielle (en m/min) de l'acier en fusion circulant dans la chambre à vide, $G_P$ est le débit (en $Nm^3$/min) du gaz plasma, $\pi$ est un rapport d'une circonférence d'un cercle à son diamètre, L est une distance centre à centre (en m) entre un schnorkel ascendant et un schnorkel descendant, Q est le débit de circulation (en tonne/min) de l'acier en fusion circulant dans la chambre à vide, $\rho$ est une masse volumique (en kg/$m^3$) de l'acier en fusion, H est une hauteur d'acier en fusion (en m) dans la chambre à vide, et d est un diamètre intérieur (en m) de la chambre à vide.

4. Procédé d'affinage d'acier en fusion selon l'une quelconque des revendications 1 à 3, dans lequel une concentration totale d'oxyde de fer et d'oxyde de manganèse dans un laitier qui flotte sur une surface de l'acier en fusion contenu dans la poche de coulée est de 5 % en masse ou moins.

5. Procédé d'affinage d'acier en fusion selon l'une quelconque des revendications 1 à 4, dans lequel le traitement au plasma réduit simultanément des quantités de trois éléments, l'oxygène, l'azote et le soufre, contenus dans l'acier en fusion.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4305792 B
- CN 112226582 A
- JP H05195043 A
- JP S4912 B